# EUROPEAN PATENT SPECIFICATION

(11) **EP 0 439 355 B1**
(45) Date of publication and mention of the grant of the patent: **28.09.1994**
(21) Application number: 91300543.5
(22) Date of filing: 24.01.1991
(51) Int. Cl.: B65G 1/137

(54) **A system for filling orders**
Kommissionniersystem
Système pour composer des commandes

(30) Priority: 24.01.1990 US 469217
(43) Date of publication of application: 31.07.1991
(73) Proprietor: AUTOMATED HEALTHCARE, INC., Pittsburgh, Pennsylvania 15238 (US)
(72) Inventor: McDonald, Sean C., Pittsburgh, Pennsylvania 15221 (US); Hertz, Ellen J., Pittsburgh, Pennsylvania 15217 (US); Smith, James A., Allison Park, Pennsylvania 15101 (US); Toto, Gregory, Pittsburgh, Pennsylvania 15228 (US)
(74) Representative: Jones, Michael Raymond

(56) References cited:
- WO-A-86/01386
- FR-A- 2 596 299
- US-A- 3 986 612
- US-A- 4 678 390

## Description

### FIELD OF THE INVENTION

The present invention relates to filling orders. More specifically, the present invention relates to the automated filling of prescription and automated restocking of medicines used for filling the orders.

### BACKGROUND OF THE INVENTION

Currently, in large hospital environments, doctors visit patients in nursing units and write out medication orders for each patient. A patient is typically placed on a certain medication treatment which requires multiple doses of medication over a period of a day. Some medications are administrated at certain times of the day and possibly at intervals of several hours. Patients may also request certain medications on an elective basis for disorders such as headaches. These requests are included in the doctor's order that is sent from the nursing unit to the central pharmacy of the hospital.

Once an order is received by the pharmacy, it is checked by registered pharmacists and input into the pharmacy information system. These orders reflect not only orders that are added to a particular patient's treatment but changes in the medication treatment. The pharmacy information system combines this information with the patient's existing medication schedule and develops a patient medication profile. A fill list is generated from that profile. The fill list is a list of all the medications that must be distributed to all patients for the day. This information is sent to the pharmacy printer where a hard copy is generated.

At this point, the drugs for a particular patient are hand picked by either a pharmacist or a pharmacy technician and placed in the particular patient's designated box. A registered pharmacist must then check the accuracy of the patient order before it leaves the pharmacy. Individual patient boxes are then loaded into a large cassette and delivered to the nursing unit.

Approximately 30% of the drugs dispensed each day are returned to the pharmacy unused. Since each drug is individually packaged, the drugs must be returned to the pharmacy stock. Patients are then credited for unused medication. This return and crediting process is a very time consuming task and requires significant amount of pharmacy man power.

Currently, this is a very time consuming, man power intensive task. In a typical large pharmacy up to 35 pharmacists and pharmacy technicians are responsible for all aspects of the unit dose dispensing task. Because this process is done manually a certain amount of error exists. Studies have estimate that a half percent error rate is typical in a large hospital. Since a hospital may dispense over 6000 doses each day, this error rate leads to a significant number of missed or incorrect doses.

Several companies have tried to automate this process through various approaches to the problem. Meditrol, utilizes a vending machine approach to dispense the unit dose medications. Each nursing unit must have it's own stock of prescription drugs. Nurses key in a patient ID and the drugs for that patient are then dispensed from the vending machine. This system is very expensive due to the necessity of purchasing a system for each nursing unit. Also, restocking each machine is a very time consuming task. Implementation of the system requires a complete modification of the current drug dispensing process which many hospitals are reticent to undertake. The system claims no labor saving advantages from it's implementation. This system is covered under patent number US-A-3,917,045 titled "Drug Dispensing Apparatus" and dated Nov. 11, 1975.

Baxter Travenol uses a dispensing system from Samsung, a Korean company, which dispenses bulk solids into a package which is dispensed to the pharmacist. This system only dispenses the 200 most frequently used solids. A typical hospital formulary can contain over 1500 different medications, many in liquid, syringe or bottle form. These medications must be manually picked by the pharmacy.

Neither system allows the dispensed medications to be automatically returned to the storage area.

An automated system for handling products in storehouses is disclosed in United States Patent 4,697,390 to Bonneton et al. They describe a self-powered truck adapted to handle stock bins stored on a series of parallel shelves. Each bin contains a number of parts or packages. The bin must be removed from the shelves and the ordered part must be removed from the bin. There is no distinct location for individually ordered items. If different items are contained in one bin it would be time consuming to separate them. hence, it is difficult to easily conduct an inventory of items in storage.

According to one aspect of the present invention, there is provided a system for selecting and delivering packages from a storage area in order to fill orders, the system comprising a storage area of the type containing a plurality of locations each location being sized and configured to hold at least one package and each location having a distinct x, y coordinate, the system furthermore comprising
(a) automated picking means sized and configured to be able to hold packages, to select packages from the storage area locations and to place packages in the storage area locations in accordance with instructions received from a computer, the automated picking means having means for attaching to and moving individual packages; and
(b) a computer having at least one memory which contains a program for directing the automated picking means to chosen storage area locations and a database containing at least one distinct x, y coordinate location in the storage area;
wherein only one type of package is stored in each x, y coordinate location and the packages are sized and stored in a manner so that the packages can be placed into and removed from the storage area by the automated picking means;
wherein each individual package has a machine readable label;
and wherein the system also includes a package reader associated with the automated picking means for reading the label. Conveniently the label includes a bar code, and the package reader includes a bar code reader.

The system may further include one or more of:
a check station having reading means for reading the machine readable labels;
a conveyor positioned to receive packages from the automated picking means;
prescription boxes which are moved by the conveyor to the region of the automated picking means such that the automated picking means can transfer the package or packages which it has picked to the associated box in order to fill a given order; and
a supply means for supplying packages, wherein the automated picking means is capable of accessing not only the locations in the storage area but also the supply means.

Preferably the storage area comprises a frame for supporting a plurality of support rods for holding packages, each rod being associated with a package having given contents and containing packages with only the same contents. The frame can be provided with a plurality of back rod supports from which the rods extend, with each rod having a unique x, y coordinate, the automated picking means being capable of removing a package from a rod or of placing a package from a supply means on the appropriate rod during restocking.

In this case, the automated picking means preferably includes at least one means for attaching to an individual package, and also includes a two link support structure having at least one column to support the tooling and at least one row to support the column in such a manner that, in use, the tooling may move along the column as the column moves along the row in order to pick a selected package hanging from a corresponding support rod, or restock a given package on a corresponding support rod in the supply means;
wherein the means for moving the column with respect to the row and the picking means with respect to the column, are controllable by the computer.

Conveniently the automated picking means includes means for producing a suction; a suction rod in fluid communication with the suction-producing means, the suction rod being slidably attached to a housing for movement in Y and Z directions and maintaining a suction therethrough when the suction-producing means is activated;
wherein, when suction is applied to the suction rod, a package may be secured to the picking means by means of the suction; and
wherein there are also means for sensing when a package is properly positioned on a suction head such that the package is then moved to a storing means before depositing the package thereon.

One preferred system is that wherein the picking means comprises:
a housing;
means for storing packages attached to the housing;
means for obtaining a package, said obtaining means being slidingly attached to the housing such that it can move in a Z direction, which is perpendicular to the X and Y directions, to pick a package from a support rod when the housing is adjacent to and aligned with a support rod, and can move in the Z direction to place a picked package on the storing means; and
identifying means attached to the housing such that it can identify a package to be picked by the obtaining means, each of said packages having an identity disposed on them which can be read by the identifying means.

When the system includes suction means, the picking means can include valves and pneumatic cylinders for moving the suction rod in the Y and Z directions; and a vacuum pump for providing suction to the suction rod and suction head sufficient to pick a package from a rod of the storage area and then hold it to the suction head.

Conveniently the suction head has two faces, through which a suction can be drawn, each face, being capable of picking a package. Preferably the two faces are parallel to each other and are parallel to the x-axis, and wherein each package has a face and the packages are held by the storing means and the rods of the support structure such that the face of each package is parallel to the x-axis.

The rods may extend from the back rod supports in sets of two, with a first rod and a second rod in each set pointing essentially in the Z direction, which is perpendicular to the X and Y directions. In this case conveniently the picking means includes a first gripper and a second gripper that picks the packages; and a first and second tooling support structure, each tooling support structure having at least one column and at least one row to support the column, such that the first and second tooling moves along the respective column and the respective column moves along the respective row of the first and second tooling support structure, respectively, to pick a given package from a corresponding support rod or restock a support rod with an associated medicine package.

Alternatively, the picking means includes at least one gripper that picks the packages; and a tooling support structure having at least one column to support the picking means and at least one row to support the column such that the picking means moves along the column as the column moves along the row to pick a given package hanging from a corresponding support rod, said gripper being able to turn on the column to pick packages in either the first or second storage area; and
means for moving the column with respect to the row, said moving means being controlled by a computer and in communication therewith.

The system may include a supply station for receiving new and returned packages, the supply station having a plurality of locations, each location being sized and configured to hold at least one package in a manner so that the package can be placed into and withdrawn from the locations by the automated picking means, with each location having a distinct x, y coordinate. Preferably the supply station is movable and is sized to be removably positioned adjacent to the storage area.

The packages may contain individual doses of a medicine.

In the preferred embodiment of the invention described herein, the Automated Pharmacy Station™, or APS™, is able to dispense all dosage forms currently contained in a hospital pharmacy. Medicines are automatically dispensed by the system per a patient order and placed in medication boxes for the pharmacist to check. Each drug is individually barcoded so that the accuracy of the dispensing process can be automatically checked by the system. Once drugs are returned to the pharmacy the system automatically returns the drugs to it's inventory and credits the patient's account for the drugs returned. The hospital will recognize significant labor savings as well as savings based on improved accuracy in the dispensing function and better tracking of inventory and expired medications.

The present invention pertains to a system for filling orders, such as prescriptions for patients. The system comprises means for holding packages. Each package has the same type of contents being held in a predetermined location by the holding means. Each package has an identity which defines the contents therein. The holding means has a plurality of predetermined locations corresponding to a plurality of different types of contents. Additionally, the system is comprised of means for supplying packages to the holding means. Also, there is a means for picking a package from the holding means that is identified in the order for the purpose of filling the order, or from the supplying means for the purpose of restocking the holding means. The picking means is in communication with the holding means and the supplying means.

In the preferred embodiment, the contents of each package is a single dose of medicine.

### BRIEF DESCRIPTION OF THE DRAWINGS

In the accompanying drawings, the preferred embodiments of the invention and preferred methods of practicing the invention are illustrated in which :
Figure 1 is a schematic representation of a system for filling orders.
Figure 2 is a side view of a package.
Figure 3 is a perspective view of a schematic representation of a storage structure.
Figure 4a is a perspective view of a schematic representation of an end of arm tooling.
Figure 4b is a side cutaway representation of an end of arm tooling.
Figure 4c is a schematic representation of the mounting means for an end of arm tooling.
Figure 5 is a schematic representation of a side view of a support structure 28 with the tooling structure.
Figure 6a is a perspective view of a schematic representation of a rod connected to a back rod support bar.
Figure 6b is a schematic representation of a side view of a first rod and a second rod in a support structure.
Figure 7 is a schematic representation of an overhead view of an alternative system for filling an order.
Figure 8 is a flowchart of the filling process.
Figure 9 is a flowchart of the check process.
Figure 10 is a flowchart of the return process of medicines packages from a nursing unit.
Figure 11 is a flowchart of the restocking process.

### DESCRIPTION OF THE PREFERRED EMBODIMENT

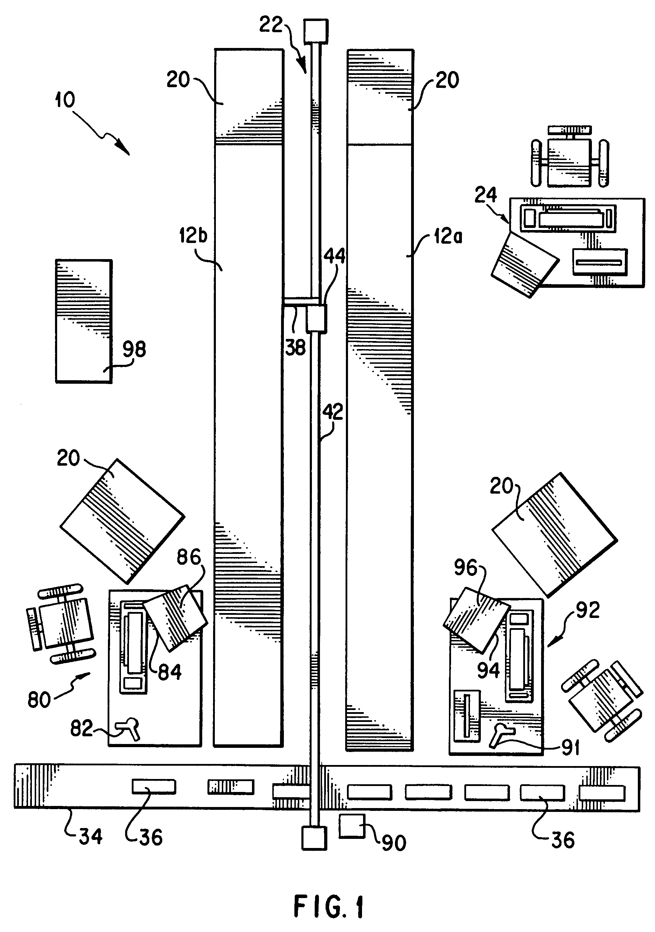

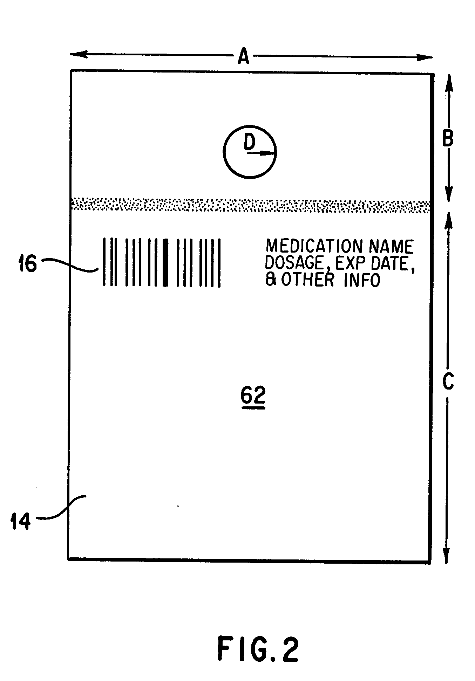

Referring now to the drawings wherein like reference numerals refer to similar or identical parts throughout the several views, and more specifically to Figure 1 thereof, there is shown a schematic representation of a system 10 for filling orders, such as prescriptions for patients. The system 10 is comprised of means 12 (shown as 12a and 12b) for holding packages. Each package has the same type of contents, such as a same type of medicine and preferably a single dosage of the medicine. Each package having the same medicine is held at a predetermined location by the holding means 12. Each package 14 has an identity 16, preferably a bar code, which defines the contents, and preferably the dosage of and expiration date of the medicine contained therein, as shown in Figure 2. Figure 2 is a schematic representation of a package 14.

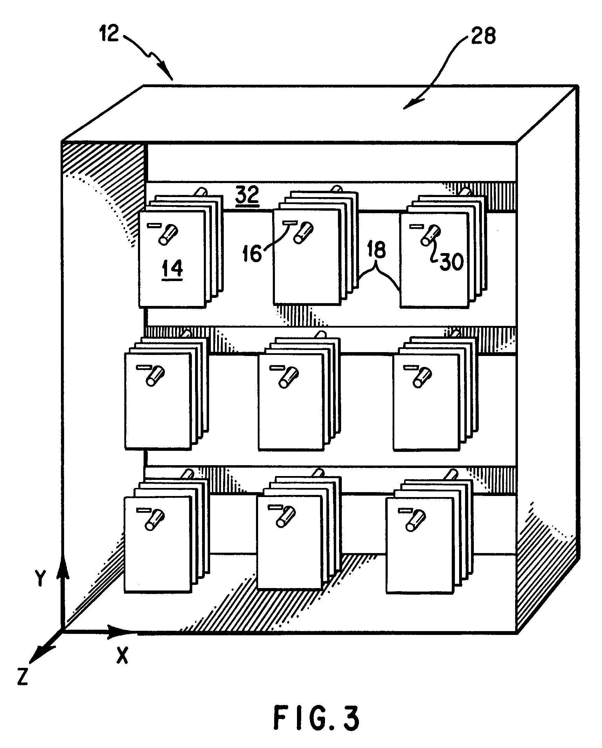

For instance, in a preferred embodiment the package 14 could have A equal 3.50 inches, B equal 1.0 inches, C equal 3.0 inches and D equal 0.1875 inches. Alternatively, the package 14 can have A equal 5 inches, B equal 1.25 inches, C equal 5.0 inches and D equal 0.1875 inches. The holding means 12 has a plurality of predetermined locations 18 corresponding to a plurality of different types of contents, such as medicines, as shown in Figure 3. Figure 3 is a schematic representation of a perspective view of the holding means 12.

An individual dose of medicine can be manually fed into an automated packaging system 98, as shown in Figure 1, which automatically seals the package and prints a barcode label directly on the package. In a preferred embodiment there is utilized the H-100™ packaging system as manufactured by Automated Packaging Systems of Twinsburg, Ohio. With the addition of the Accu-Print™ 100 Programmable In-Line Direct Transfer Imprinter, also manufactured by Automated Packaging Systems, a barcode label can be printed directly on the medicine package.

The system 10 is also comprised of means 20, such as a restock rack, for supplying packages 14 to the holding means 12, as shown in Figure 1. There is also means 22 for picking a package 14 from the holding means 12 that is identified in the order, such as a prescription, for the purpose of filling that prescription, or from the supplying means 20 for the purpose of restocking the holding means 12. The picking means 22 is in communication with the holding means 12 and the supplying means 20.

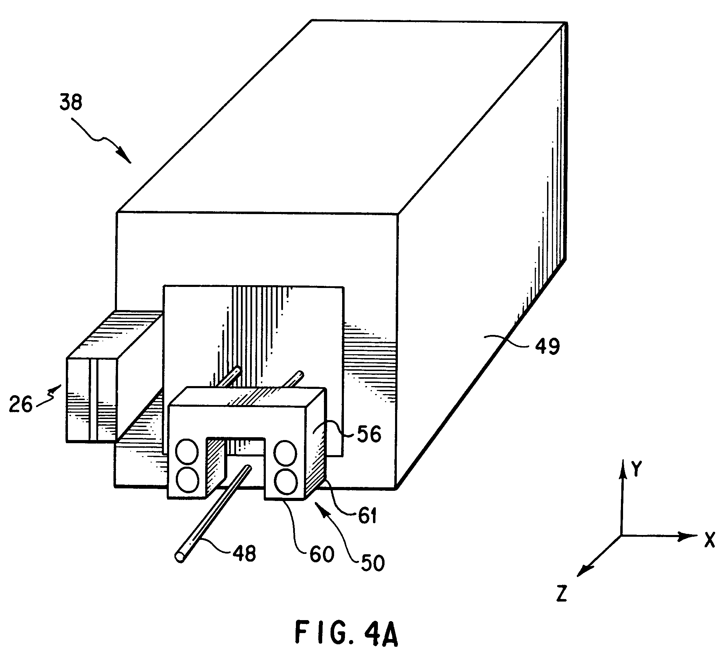

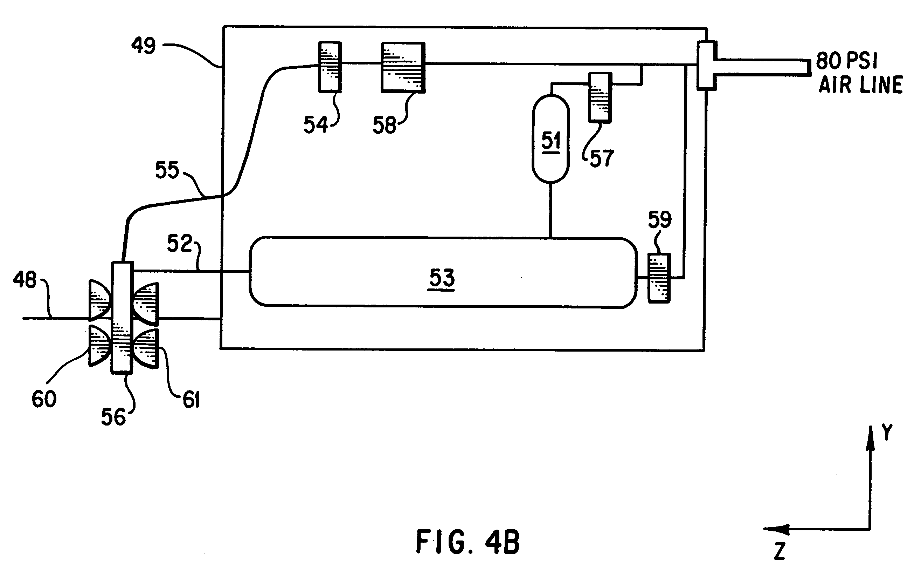

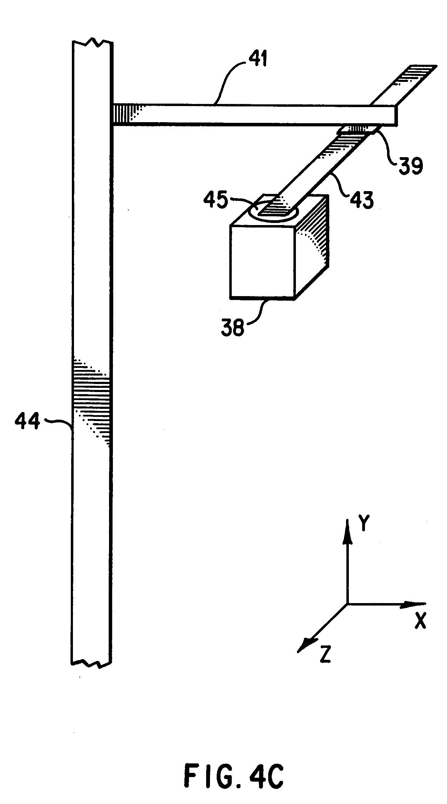

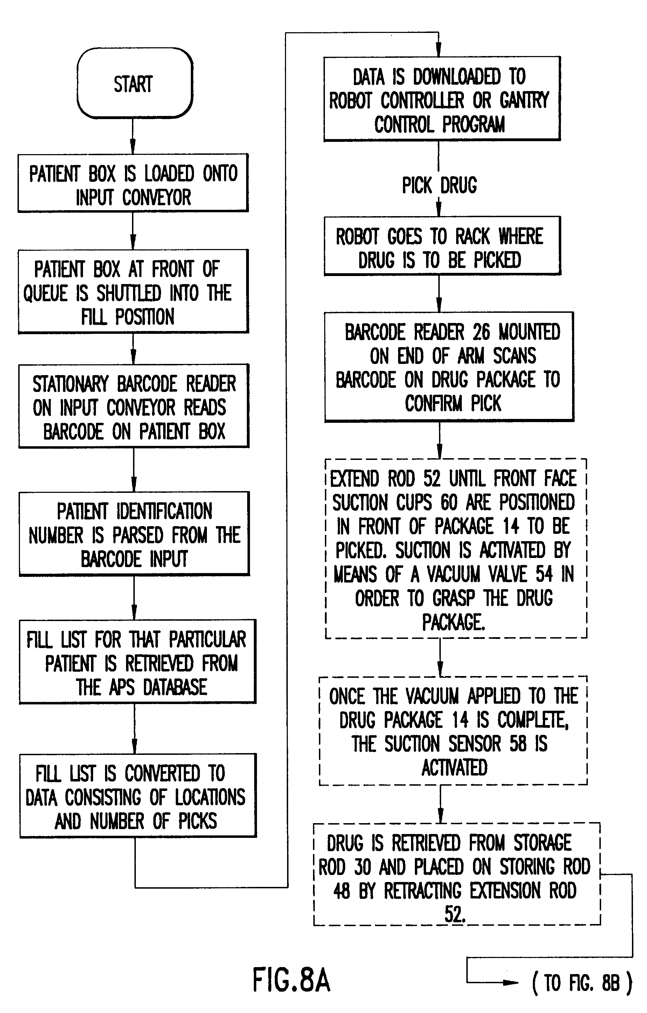

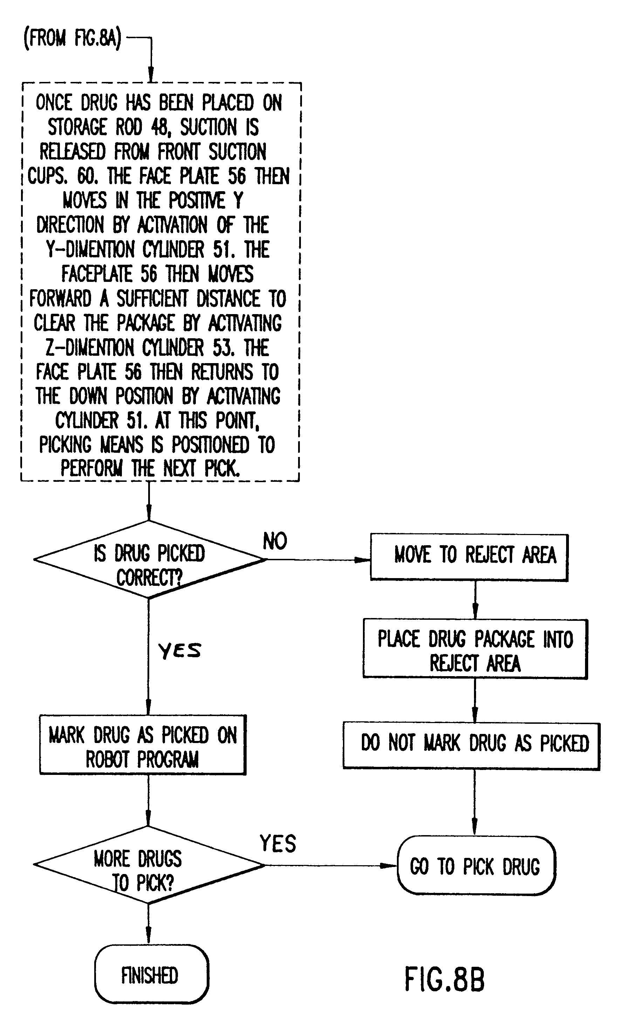

The system 10 is also comprised of means 43, such as a pneumatic actuator, for allowing the system 10 to position the picking means 38, in front of either holding means 12, as shown in Figure 4. In the preferred embodiment, the picking means 38, is mounted on a support rod 41 attached to the Y dimension of the tooling support structure 44. A conceptual drawing of this device is described in Figure 8. This structure 41, has means 45, for pneumatically flipping the picking means 38, approximately 180°, such that the face of the gripper 38, is parallel to the X dimension. This is activated in order to retrieve medicines as described below from either side of the holding means 12.

The picking means 22 can include a computer 24, or local area network of computers, having a database. The database has the order, such as a prescription, to be filled, and a record of the predetermined locations 18 of, for instance each different medicine in the holding means 12. The computer 24 guides the picking means 22 based on information contained in the database such that the picking means 22 picks a medicine package 14 according to the prescription to be filled. The picking means 22 can also include means, such as a bar code reader 26 as shown in Figure 4a, for determining the identity 16 of a medicine package 14 in the supplying means 20 and providing its identity 16 to the computer 24. The computer 24 guides the picking means 22 such that the holding means 12 is restocked with the identified medicine package 14 from the supplying means 20 according to the medicine in the medicine package 14 and its predetermined location 18 in the holding means 12 that is known by the computer 24.

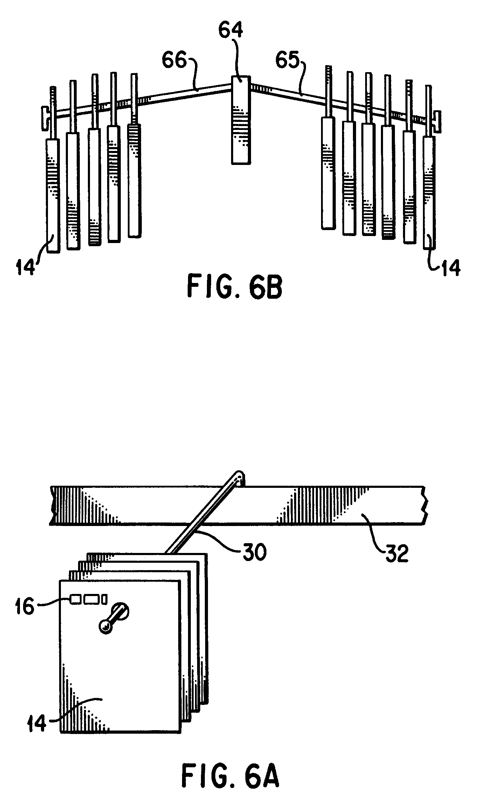

The holding means 12 can include a structure 28 as shown in Figure 3. The holding means 12 can also include support rods 30 held by the structure 28. The rods 30 hold the medicine packages 14, as shown in Figure 6a. Each rod 30 is associated with a given medicine and holds medicine packages 14 with only the same medicine.

The structure 28 can include a plurality of back rod supports 32 from which the rods 30 extend. The back rod supports 32 snap into place in the structure 28, as is well known in the art. The structure 28 with rod supports 32 forms an X,Y coordinate system with each rod 30 and medicine packages 14 therein having a unique x, y coordinate. The picking means 22 is disposed adjacent to the structure 28, as shown in Figure 1, such that a given medicine package 14 on an associated rod 30 can be picked by the picking means 22 to fill a patient's prescription; or a given medicine package 14 in the supplying means 20 can be picked by the picking means 22 to restock an associated rod 30.

The system 10 can include a conveyor 34 in communication with the picking means 22. The system can also include patient prescription boxes 36 which are moved by the conveyor 34 to the picking means 22 such that the picking means 22 provides the medicine packages 14 that are picked to fill a given prescription to an associated box 36.

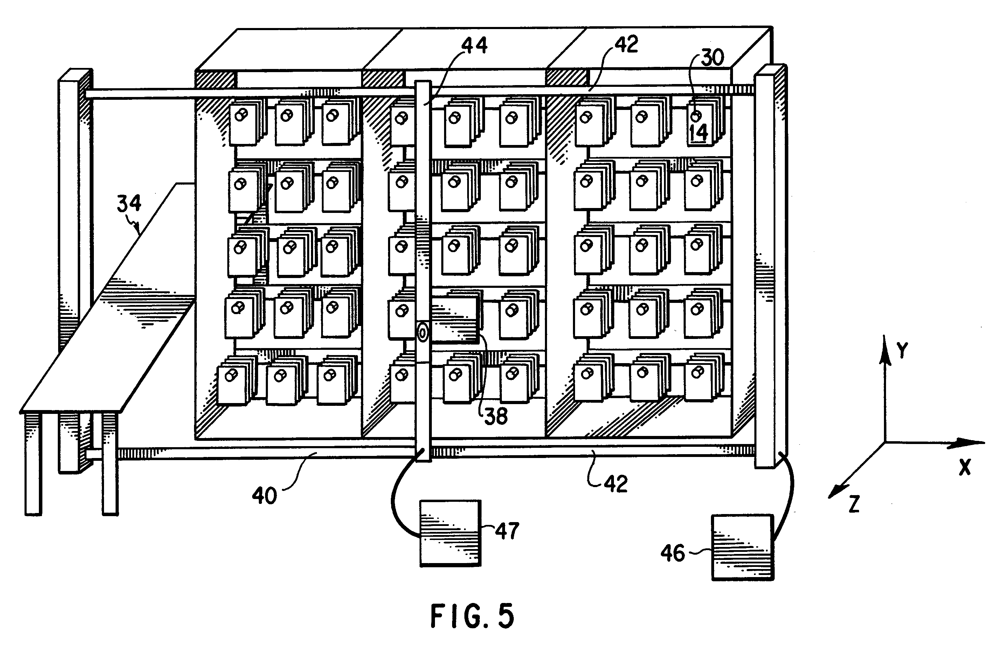

The picking means 22 can include at least one end of arm tooling 38, as shown in Figures 4a and 4b, that picks the medicine packages 14. Figure 4a is a perspective view of a schematic representation of the end of arm tooling 38. Figure 4b is a simplified side view of the end of arm tooling. The picking means 22 also can include a tooling support structure 40, as shown in Figure 5. The tooling support structure has at least one column 44 to support the tooling 38 and at least one row 42 to support the column 44 such that the tooling 38 in a housing 49 thereof moves along the column 44 under the power of a drive motor 47 to pick a given medicine package 14 hanging from a corresponding support rod 30; or restock a given medicine package 14 on a corresponding support rod 30. The picking means 22 can also include means 46 for moving the column 44 with respect to the row 42. The moving means 46 is controlled by the computer 24.

The end of arm tooling 38 is preferably comprised of a housing 49, as shown in Figure 4a. The tooling 38 is also comprised of means for storing medicine packages 14, such as a storing rod 48, attached to the housing 49. The tooling 38 is also comprised of means 50 for obtaining a medicine package 14. The obtaining means 50 is slidingly attached to the housing 49 such that it can move in a Z direction, which is perpendicular to the X,Y directions, to pick a medicine package 14 from a support rod 30 in the support structure 28 to which the housing 49 is adjacent and with which it is aligned. The identifying means, for example, the bar code reader 26, is mounted on the end of arm tooling 38 such that it can identify a package 14 to be picked by the obtaining means 50.

The obtaining means 50 preferably includes means for producing a suction, such as an air line 55 controlled by a vacuum valve 54. The Obtaining means 50 also preferably includes an extension rod 52 in fluidic communication with a pneumatic cylinder 53, as shown in Figure 4b. The extension rod 52 is slidingly attached with respect to the Y and Z directions to the housing 49. A suction is maintained through the air lines 55 when the vacuum valve 54 is activated. The obtaining means 50 also can include a suction head 56 connected to the extension rod 52 through which a medicine package 14 is picked with suction. The obtaining means 50, preferably also includes means 58 for sensing when a package 14 is properly positioned on the suction head 56 for example by detecting air flow therethrough. The suction head 56 is then moved to the storing means, such as the storing rod 48, to deposit the package 14 thereon. Preferably, the storing means is a storing rod 48 which extends from the housing 49 such that the suction head 56 and the extension rod 52 can deposit a package 14 thereon.

The extension rod 52 can move in the Y and Z directions to place a picked package 14 on the storing rod 48 under the action of vacuum valves and cylinders 51 and 53. The vacuum valve 57 activates cylinder 51 to move both the cylinder 53 and the extension rod 52 in the Y direction. The vacuum valve 59 activates cylinder 53 to move the extension rod in the Z direction. The vacuum valve 54 provides suction to the air lines 55 and suction head 56 sufficient to pick a package 14 from a rod 30 of the support structure 28 and then hold it to the suction head 56. The suction head 56 preferably has two faces 60 and 61 through which suction can be drawn. One face 60 is capable of picking a package 14 off of a rod 30 of the support structure 28 and the other face 61 is capable of picking a package 14 off of a storing rod 48. Preferably, the two faces 60 and 61 are parallel to each other and are parallel to the X axis. Each package 14 preferably has a face 62 and the packages 14 are held by the storing rod 48 and the rods 30 of the support structure 28 such that the face 62 of each package is parallel to the X axis. The outside face 60 is utilized when a package 14 is being removed from a rod 30, and the inside face 61 is utilized when a package 14 is being removed from the storing rod 48.

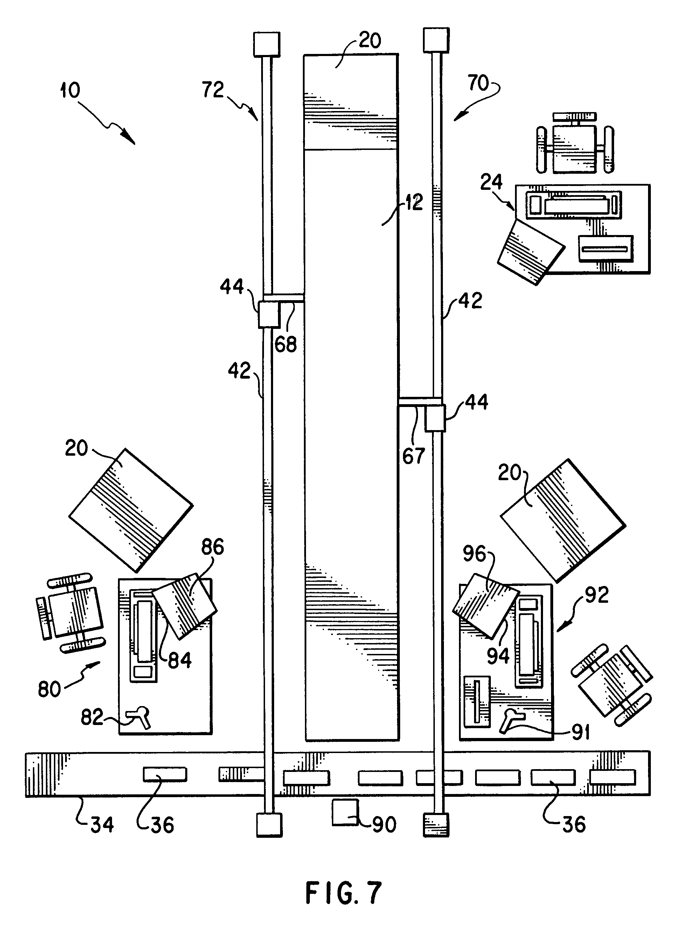

In an alternative embodiment, the rods 30 extend from the double rod support bar 64 in sets of two as shown in Figure 6b. A first rod 65 and a second rod 66 of each set point essentially in the Z direction, but approximately 180 degrees apart from each other. The picking means 22 includes a first end of arm tooling 67 and a second end of arm tooling 68 that picks the medicine packages 14; and a first tooling support structure 70 and a second tooling support structure 72 as shown in Figure 7. Each tooling support structure has at least one column 44 and at least one row 42 to support the column 44 such that the first and the second tooling moves along the respective column 44 and the respective column 44 moves along the respective row 42 of the first and second tooling support structure, respectively, to pick a given medicine package 14 from a corresponding support rod 30, or restock a support rod 30 with an associated medicine package 14.

In the operation of the preferred embodiment, doctors visit patients in nursing units and write out medication orders for each patient. A patient is typically placed on a certain medication treatment which requires multiple doses of medication over a period of a day. Some medications are administrated at certain times of the day and possibly at intervals of several hours. Patients may also request certain medications on an elective basis for disorders such as headaches. These requests are included in the doctor's order that is sent from the nursing unit to the central pharmacy of the hospital. Once an order is received by the pharmacy, it is checked by registered pharmacists and input into the pharmacy information system. These orders reflect not only orders that are added to a particular patient's treatment but changes in the medication treatment. The pharmacy information system combines this information with the patient's existing medication schedule and develops a patient medication profile. A fill list is generated from that profile. The fill list is a list of all the medications that must be distributed to all patients for the day. This information is sent to the pharmacy printer where a hard copy is generated.

Means for communication between the pharmacy information system and the Automated Pharmacy Stations™ (APS™) exists by either tapping the serial data print stream of the pharmacy information system or by a direct bi-directional communication link. The relevant information concerning the patient including drug type, dosage and frequency is placed in the database of the APS™, see Figure 8. The database of the APS™ contains information about which drugs are to be dispensed that day to the patient and all drugs that have been dispensed in the past to the patient. Information from the pharmacy information system is received on an ongoing basis throughout the day. New information can be entered into the APS™ at any time. In addition to the fill list, new orders and patient admittance, discharge and transfer information are received and stored. A specific prescription for a patient is filled as described in Figure 8. Figure 8 is a flow chart with respect to the processing of a patient prescription. The patient box 36 is placed on the conveyor 34. When the turn comes for the patient box 36 to be filled, it has been shuttled into a position on the conveyor 34 such that the end of arm tooling 38 can communicate with the box 36 by way of the tooling structure 40 as shown in Figure 1. A stationary bar code reader 90 reads the bar code on the patient box 36. The patient identification number is then parsed from the bar code input. This causes the fill list for that particular patient to be retrieved from the APS™ database. The fill list is converted to data consisting of locations and number of picks. The data is then downloaded in order for the computer 24 to control the end of arm tooling 38 such that it knows what packages 14 to obtain and place in the patient box 36.

The specific medicine package 14 is picked by the column 44 moving along the row 42 until the column 44 has the same X coordinate as the medicine package 14 it desires to obtain. The end of arm tooling 38 then moves along the column 44 to the Y coordinate of the medicine package to be picked. It is also turned to the proper holding means 12 (either the first holding means 12a or the second holding means 12b) which has the desired package 14. These actions may also be performed simultaneously by the system. The tooling support structure utilized is a Hauser*TM* HLE linear drive.

When the end of arm tooling 38 is property positioned, the suction rod 52 extends in the Z direction by pneumatic cylinder 53 such that the outside suction face 60 contacts the package face 62. The barcode reader 26 reads the identity 16 on the medicine package 14 in order to confirm that it is the proper medicine package to be picked with respect to the patient's prescription. The vacuum valve 54 activates a suction through the air lines 55 such that a suction drawn through the suction face 60 grabs the medicine package 14. When the contact is proper between the suction face 60 and the medicine package 14, the sensing means 58 sends a signal to the valve 59 causing the extension rod 52 to retract from the rod 30 of the support structure 28, pulling the medicine package 14 with it. Once the medicine package 14 is clear of the rod 30, the extension rod 52 positions the medicine package 14 that it has obtained, upon the storing rod 48.

Once the medicine package 14 is on the storing rod 48, the vacuum valve 54 terminates the suction and the medicine package is released from the suction face 60.

The vacuum valve 57 then activates the cylinder 51 such that the extension rod 52 (and cylinder 53) are moved in the Y direction so the bottom of the suction head 56 is above the package 14 on the storing rod 48. The extension rod is then moved forward in the Z direction and downward in the Y direction by the respective valves and cylinders to clear the package and position the suction head 56 for the next pick. The computer 24 then notes that the medicine package 14 with the appropriate medicine has been picked. The process is repeated for all the medicine identified in the patient's prescription until all of the medicine packages 14 needed have been picked.

The end of arm tooling then positions itself with respect to the row 42 and column 44 such that it is over the patient box 36. The end of arm tooling then positions the outside suction face 60 behind the medicine packages on the storing rod 48 that have been collected and strokes forward in the Z direction so that all packages 14 are pushed off the storing rod 48 into the patient box 36.

More specifically, vacuum valve 57 activates the cylinder 51 to retract in the positive Y direction such that the bottom of the suction head 56 is above the tops of the packages 14 on the storing rod 28. Then vacuum valve 59 activates cylinder 53 to retract the extension rod 52 in the negative Z direction such that the outer suction face 60 is behind all of the medicine packages 14 on the storing rod 48. Vacuum valve 57 is then activated such that the suction head 56 is dropped back down in the negative Y direction to be behind the packages 14. Finally, vacuum valve 59 is activated such that the extension rod 52 is extended in the positive Z direction and the front suction face 60 pushes all packages 14 off the storing rod 48 into the patient box 36.

In the event that the wrong medicine package 14 was scanned and is picked, or the medicine has expired, then the end of arm tooling 30 is moved to an empty portion of the return area, where the medicine package 14 can be disposed. A pharmacy technician will then manually sort the drugs on this rack, removing expired drugs and placing the others in the return rack in order that they might be returned to their correct location in the system. The process is then repeated for the next drug on the prescription list that has not yet been obtained.

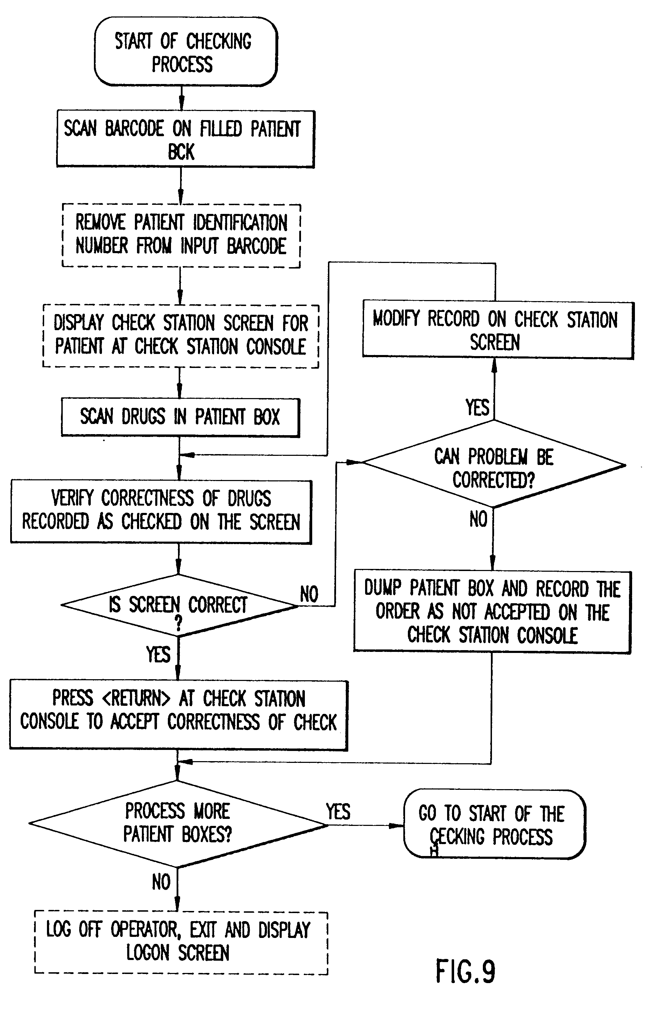

After a patient's prescription is filled and the patient box 36 has all the medicine packages called for in the prescription, a conveyor belt 34 moves the patient box 36 to a check station 80. An operator uses the check station bar code reader 82 to scan the bar code label on the filled patient box 36, see Figure 9. The patient identification number is taken from the inputted bar code and the prescription of the patient is displayed on the check station screen 84 of the check station console 86 connected to the computer or network of computers 24. The operator then scans individual medicine package bar codes in the patient box 36. The identity of the medicine packages 14 in the patient box 36 are automatically checked for correctness with respect to the patient list on the station screen 84. If the medicine packages 14 in the box 36 are correct, then the patient box is allowed to continue on towards the ultimate destination and the next filled patient box 36 is then checked. If the medicine packages 14 in the patient box 36 are not correct, then it is determined whether the error, whatever that may be, can be corrected. If it can, then the record on the check station screen 84 is corrected and the procedure for verifying correctness is then repeated. If the problem cannot be corrected, then the patient box 36 is dumped and the computer is notified that the patient's prescription has not yet been filled.

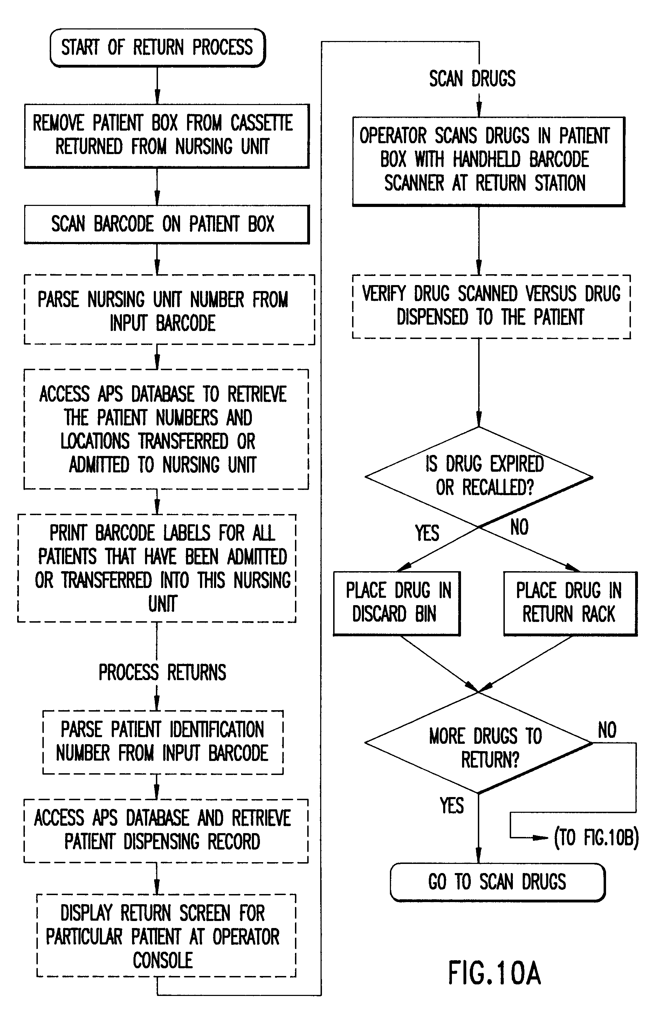

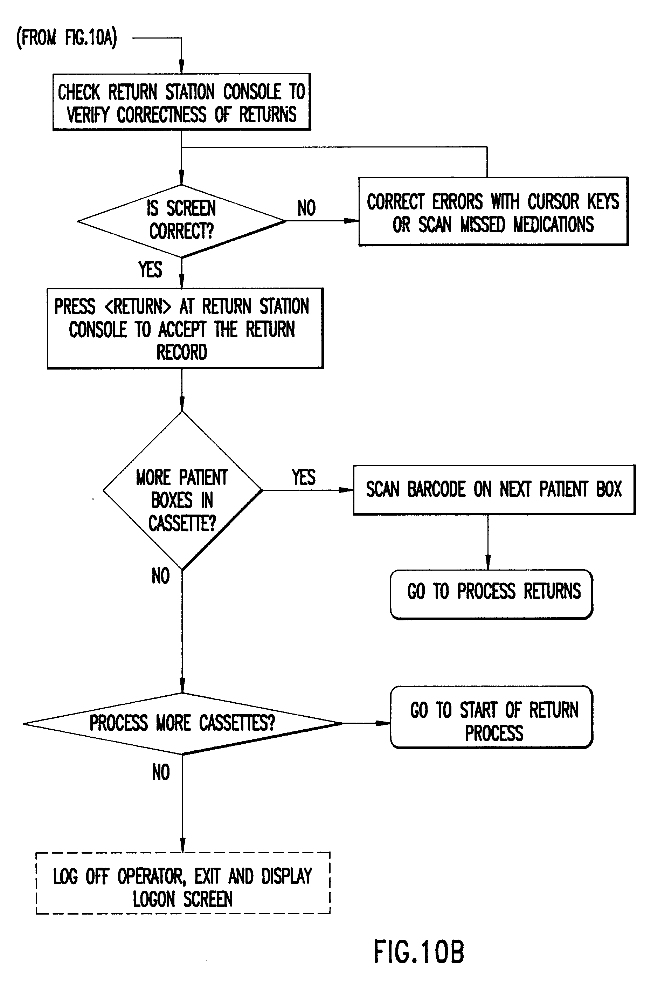

With respect to the return process, see Figure 10, the patient box 36 is first removed from a cassette returned from a nursing unit. An operator uses the return station barcode scanner 91 on the return station 92 to scan the bar code on the patient box 36. The nursing unit number and the patient identification number is then parsed from the inputted bar code of the patient box 36. The APS™ database is then accessed and the patient dispensing record is retrieved. On the return screen 94, there is displayed for a particular patient at the operator console 96, a list of the medicines ordered and dispensed to the patient. The operator of the return station 92 then scans the identity 16 of the medicine in the patient's box 36 with the return station bar code scanner 91. The medicine packages 14 that are found thereon are verified as being dispensed to the patients. The expiration date of the medicine in the medicine package 14 is then determined. If the expiration date of a medicine in the medicine package 14 has passed, then the medicine package 14 is discarded. If the expiration date has not passed then the returned medicine package 14 is placed in the return rack 20. If there is more medicine to be returned, the process is then repeated. If there is no more medicine in the patient box 36 to return, then the return station console 96 is checked to verify the correctness of the medicine returned. If the screen is correct, then the return record is accepted and the APS™ database is updated. If the screen 94 is incorrect, then the screen is corrected to correspond to the returned medicine packages 14 and the patient box 36.

The APS™ data base is then accessed in order to retrieve the patient numbers and locations transferred or admitted to the nursing unit. If a new patient has been transferred into that particular hospital bed, the system generates a barcode containing his/her patient identification number. This label is placed on the patient box to reflect the present patient in that hospital bed.

If there are more patient boxes 36 in the cassette, then the bar code on the next patient box 36 is scanned and the return process continues as described above. This process is repeated for each cassette returned from the patient floor.

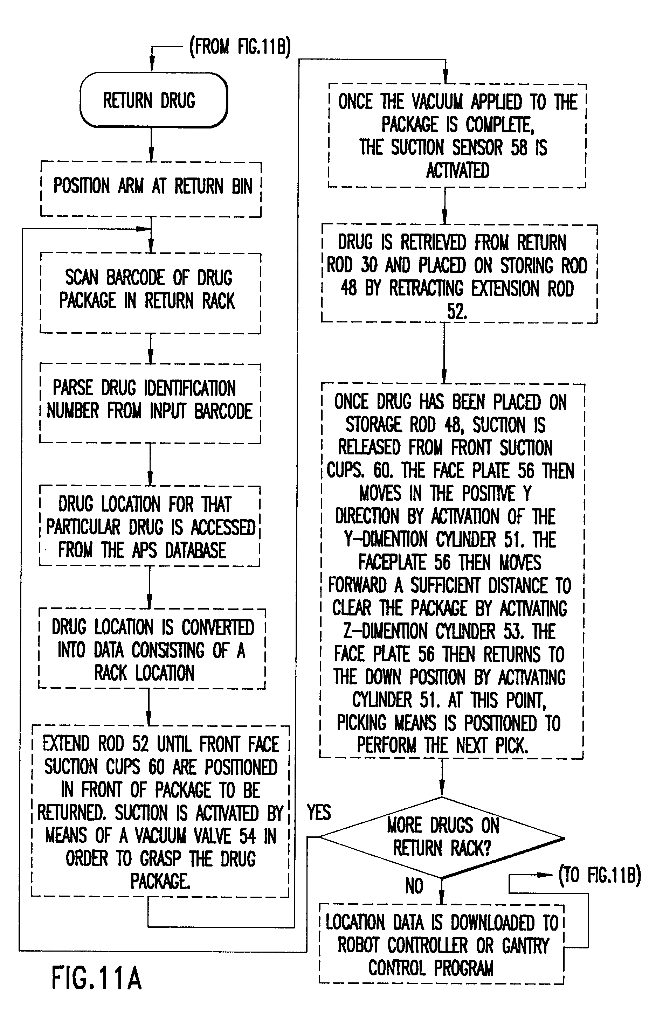

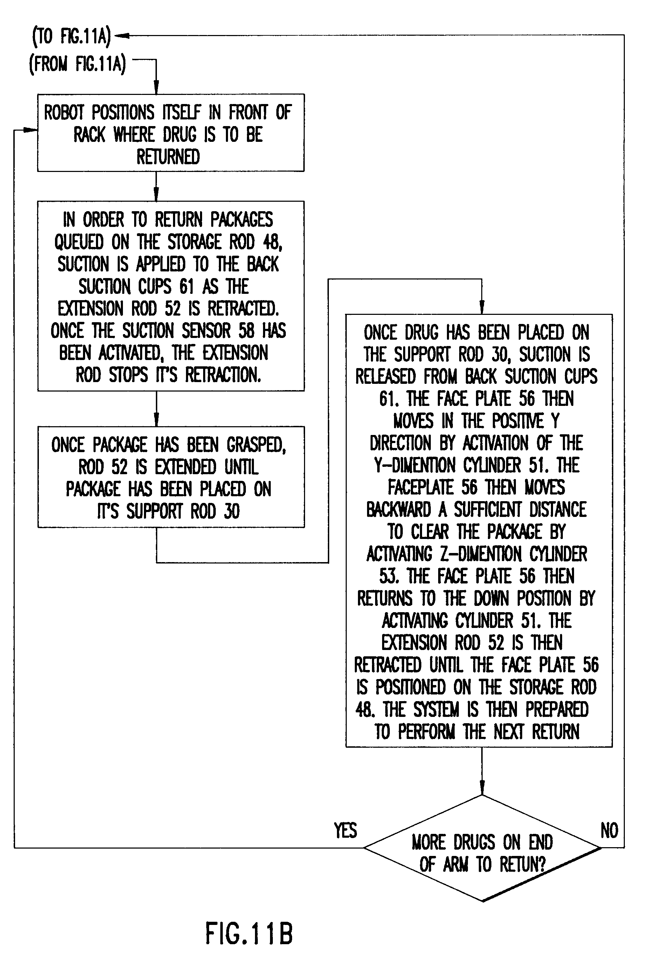

When medicine packages 14 are to be restocked to the structure 28, see Figure 11, the return rack is placed in a predetermined position alongside the structure 28. By being placed in a predetermined position, the rods X and Y coordinates are known to the computer 24. The end of arm tooling 38 is then positioned for a given rod in the return rack. The bar code reader 26 on the end of arm tooling 38 then scans the identity 16 of the medicine package 14 that is about to be picked by the end of arm tooling 38. The process of picking the medicine packages 14 onto the storing rod 48 of the end of arm tooling 38 is the same as identified above with respect to the process of obtaining medicine packages 14 from the support structure 28. The only difference is that the order of the medicine packages 14 and their identity as they are picked is saved in the computer 24. When the storing rod 48 is then moved to the support structure 28, in order to restock rods 30 therein, the computer knows the identity of the respective medicine package 14 on the storing rod 48 which is about to be placed back onto the corresponding rod 30 of support structure 28.

The placement of the package 14 from the storing rod 48 to the storage rod 30 of the support structure 28 occurs in the following manner. The extension rod 52 is retracted in the negative Z direction such that the inside suction face 61 is in contact with the medicine package 14. The sensing means 58 determines whether proper contact is made. Then the extension rod 52 is moved a predetermined distance in the positive Z direction to place the medicine package over a rod 30 of support structure 28. Vacuum valve 54 is then deactivated to stop suction, allowing the medicine package 14 on the suction face 61 to drop away therefrom. The extension rod 52 then moves in the negative Z direction towards the medicine packages 14 on the storing rod 48 again to repeat the process. While it moves back to obtain another medicine package 14, the sensor 58 trips when contact is made. The process can be repeated until there are no more medicine packages 14 on the storing rod 48. The computer 24 knows when to stop returning packages since it knew how many packages were placed on the storing rod 48 to begin with.

The restocking of the support structure 28 can be carried out during the evening when the medicine is not being gathered by the end of arm tooling 38. Alternatively, restocking can be carried out simultaneously with picking if the system 10 has a pair of rods as shown in Figure 6b, a first end of arm tooling 67, second end of arm tooling 68 and a first tooling structure 70 and a second tooling structure 72 is utilized, as shown in Figure 7. While, for instance, the first end of arm tooling 67 is picking medicine packages 14 to fill a patient's prescription, the second end of arm tooling 68 can be restocking the second side of the storage area 12.

Although the invention has been described in detail in the foregoing embodiments for the purpose of illustration, it is to be understood that such detail is solely for that purpose and that variations can be made therein by those skilled in the art within the scope of the following claims.

## Claims

1. A system for selecting and delivering packages (14) from a storage area (12a, 12b) in order to fill orders, the system comprising a storage area (12a, 12b) of the type containing a plurality of locations each location being sized and configured to hold at least one package (14) and each location having a distinct x, y coordinate, the system furthermore comprising
(a) automated picking means (38) sized and configured to be able to hold packages (14), to select packages from the storage area locations and to place packages in the storage area (12a, 12b) locations in accordance with instructions received from a computer (24), the automated picking means (38) having means (50) for attaching to and moving individual packages (14); and
(b) a computer (24) having at least one memory which contains a program for directing the automated picking means (38) to chosen storage area locations (12a, 12b) and a database containing at least one distinct x, y coordinate location in the storage area (12a, 12b);
wherein only one type of package (14) is stored in each x, y coordinate location and the packages are sized and stored in a manner so that the packages (14) can be placed into and removed from the storage area (12a, 12b) by the automated picking means (38);
wherein each individual package (14) has a machine readable label (16); and
wherein the system also includes a package reader (26) associated with the automated picking means (38) for reading the label (16).

2. A system according to claim 1, wherein the label (16) includes a bar code, and the package reader (26) includes a bar code reader.

3. A system according to claim 1 or 2, which further includes a check station (80) having reading means (82) for reading the machine readable labels (16).

4. A system according to any preceding claim, which also includes a conveyor (34) positioned to receive packages (14) from the automated picking means (38).

5. A system according to claim 4, which also includes patient prescription boxes (36) which are moved by the conveyor (34) to the region of the automated picking means (38) such that the automated picking means (38) can transfer the package or packages (14) which it has picked to the associated box (36) in order to fill a given order.

6. A system according to any preceding claim, which also includes a supply means (20) for supplying packages, wherein the automated picking means (38) is capable of accessing not only the locations in the storage area but also the supply means.

7. A system according to any preceding claim, wherein the storage area (12a, 12b) comprises a frame for supporting a plurality of support rods (30) for holding packages (14), each rod (30) being associated with a package (14) having given contents and containing packages with only the same contents.

8. A system according to claim 7, wherein the frame (28) is provided with a plurality of back rod supports (32) from which the rods (30) extend, with each rod (30) having a unique x, y coordinate, the automated picking means (38) being capable of removing a package (14) from a rod (30) or of placing a package (14) from a supply means (20) on the appropriate rod (30) during restocking.

9. A system according to claim 8, wherein the automated picking means (38) includes at least one means (50) for attaching to an individual package, and also includes a two link support structure having at least one column (44) to support the tooling and at least one row (42) to support the column (44) in such a manner that, in use, the tooling may move along the column (44) as the column moves along the row (42) in order to pick a selected package (14) hanging from a corresponding support rod (30), or restock a given package (14) on a corresponding support rod (30) in the supply means (20);
wherein the means (47) for moving the column (44) with respect to the row (42) and the picking means (38) with respect to the column (44), are controllable by the computer (24).

10. A system according to any preceding claim, wherein the automated picking means (38) includes means (54, 55, 60) for producing a suction; a suction rod (52) in fluid communication with the suction-producing means, the suction rod (52) being slidably attached to a housing (49) for movement in Y and Z directions and maintaining a suction therethrough when the suction-producing means (54, 55, 60) is activated;
wherein, when suction is applied to the suction rod (42), a package (14) may be secured to the picking means (38) by means of the suction; and
wherein there are also means for sensing (58) when a package (14) is properly positioned on a suction head (56) such that the package (14) is then moved to a storing means (48) before depositing the package (14) thereon.

11. A system as claimed in claim 1, wherein the picking means (38) comprises:
a housing (49);
means (48) for storing packages (14) attached to the housing (49);
means (56) for obtaining a package (14), said obtaining means being slidingly attached to the housing (49) such that it can move in a Z direction, which is perpendicular to the X and Y directions, to pick a package (14) from a support rod (30) when the housing (49) is adjacent to and aligned with a support rod (30), and can move in the Z direction to place a picked package (14) on the storing means (48); and
identifying means (26) attached to the housing such that it can identify a package (14) to be picked by the obtaining means (56), each of said packages (14) having an identity (16) disposed on them which can be read by the identifying means (26).

12. A system as described in claim 10, wherein the picking means (38) includes valves (54, 57) and pneumatic cylinders (51, 53) for moving the suction rod (52) in the Y and Z directions; and a vacuum pump for providing suction to the suction rod (52) and suction head (56) sufficient to pick a package (14) from a rod (30) of the storage area (12a, 12b) and then hold it to the suction head (56).

13. A system as claimed in claim 10, wherein the suction head (56) has two faces (60, 61) through which a suction can be drawn, each face (60, 61) being capable of picking a package (14).

14. A system as claimed in claim 13, wherein the two faces (60, 61) are parallel to each other and are parallel to the x-axis, and wherein each package (14) has a face (62) and the packages (14) are held by the storing means (48) and the rods (30) of the support structure such that the face (62) of each package (14) is parallel to the x-axis.

15. A system as claimed in claim 8, wherein the rods (30) extend from the back rod supports (32) in sets of two, with a first rod and a second rod in each set pointing essentially in the Z direction, which is perpendicular to the X and Y directions, but approximately 180° apart from each other, and wherein the picking means (38) includes a first gripper (60) and a second gripper (62) that picks the packages (14); and a first and second tooling support structure (70, 72), each tooling support structure having at least one column (44) and at least one row (42) to support the column (44), such that the first and second tooling (67, 68) moves along the respective column (44) and the respective column (44) moves along the respective row (42) of the first and second tooling support structure, respectively, to pick a given package (14) from a corresponding support rod (30) or restock a support rod (30) with an associated medicine package (14).

16. A system as claimed in claim 1, wherein the picking means (38) includes at least one gripper (60, 62) that picks the packages (14); and a tooling support structure (22) having at least one column (44) to support the picking means (38) and at least one row (42) to support the column (44) such that the picking means (38) moves along the column as the column (44) moves along the row (42) to pick a given package, said gripper (60, 62) being able to turn on the column (44) to pick packages (14) in either the first or second storage area (12a, 12b); and
means (47) for moving the column (44) with respect to the row (42), said moving means (47) being controlled by a computer (24) and in communication therewith.

17. A system according to claim 1, which also includes a supply station (20) for receiving new and returned packages (14), the supply station having a plurality of locations, each location being sized and configured to hold at least one package (14) in a manner so that the package (14) can be placed into and withdrawn from the locations by the automated picking means (38), with each location having a distinct x, y coordinate.

18. A system according to claim 17, wherein the supply station (20) is movable and is sized to be removably positioned adjacent to the storage area (12a, 12b).

19. A system according to any preceding claim, wherein the packages (14) contain individual doses of a medicine.

## Patentansprüche

1. System zum auftragsgemäßen Auswählen und Ausgeben von Packungen (14) aus einer Lagerfläche (12a, 12b), wobei das System enthält:
eine Lagerfläche (12a, 12b) von einer Art, die eine Anzahl Orte enthält, die jeweils so bemessen und gestaltet sind, daß sie mindestens eine Packung (14) halten können und jeweils eine distinkte x,y-Koordinate haben; und weiter
(a) eine automatische Greifvorrichtung (38), die so bemessen und gestaltet ist, daß sie Packungen (14) halten kann, Packungen von den Lagerflächenorten auswählen kann und nach den Anweisungen von einem Computer (24) Packungen an die Orte der Lagerfläche (12a, 12b) stellen kann, wobei die automatische Greifvorrichtung (38) eine Einrichtung besitzt, die einzelne Packungen (14) festhalten und bewegen kann; und
(b) einen Computer (24) mit mindestens einem Speicher, der ein Programm enthält, das die automatische Greifvorrichtung (38) zu den gewählten Lagerflächenorten (12a, 12b) leiten kann, sowie eine Datenbank, die mindestens eine distinkte x,y-Koordinatenstelle der Lagerfläche (12a, 12b) enthält;
worin an jeder x,y-Koordinatenstelle nur eine Art von Packung (14) gelagert ist und die Packungen (14) so bemessen und gelagert sind, daß sie von der automatischen Greifvorrichtung (38) in die Lagerfläche (12a, 12b) gestellt oder aus ihr entnommen werden können;
worin jede einzelne Packung (14) eine maschinenlesbare Kennung (16) hat; und
worin zum Lesen der Kennung (16) das System einen Packungsleser (26) enthält, der mit der automatischen Greifvorrichtung (38) verbunden ist.

2. System nach Anspruch 1, worin die Kennung (16) einen Strichcode und der Packungsleser (26) einen Strichcodeleser aufweist.

3. System nach Anspruch 1 oder 2, das zudem eine Prüfstation (80) mit einer Lesevorrichtung (82) zum Lesen der maschinenlesbaren Kennungen (16) enthält.

4. System nach irgendeinem vorhergehenden Anspruch, das auch eine Förderanlage (34) beinhaltet, die so angeordnet ist, daß sie Packungen (14) von der automatischen Greifvorrichtung (38) entgegennehmen kann.

5. System nach Anspruch 4, das zudem Patientenverschreibungsschachteln (36) aufweist, die von der Förderanlage (34) in den Bereich der automatischen Greifvorrichtung (38) befördert werden, so daß die automatische Greifvorrichtung (38) die ergriffene Packung oder die ergriffenen Packungen (14) auftragsgemäß in die zugehörige Schachtel (36) transferieren kann.

6. System nach irgendeinem vorhergehenden Anspruch, das auch eine Nachschubeinrichtung (20) für die Zufuhr von Packungen einschließt, wobei nicht nur die automatische Greifvorrichtung (38), sondern auch auf die Nachschubeinrichtung Zugriff auf die Orte in der Lagerfläche hat.

7. System nach irgendeinem vorhergehenden Anspruch, worin die Lagerfläche (12a, 12b) einen Rahmen umfaßt, der eine Anzahl Tragstangen (30) für die Halterung von Packungen (14) haltert, wobei jeder Tragstange (30) Packungen (14) mit gegebenem Inhalt zugewiesen sind und diese nur Packungen gleichen Inhalts haltert.

8. System nach Anspruch 7, worin der Rahmen (28) eine Anzahl rückwärtiger Stangenhalterungen (32) aufweist, von denen die Stangen (30) weggehen, wobei jeder Stange (30) eine nur einmal vergebene x,y-Koordinate zugewiesen ist; die automatische Greifvorrichtung (38) in der Lage ist, von einer Stange (30) eine Packung (14) zu nehmen oder beim Nachbeschicken des Lagers von einer Nachschubeinrichtung (20) eine Packung (14) auf die passende Tragstange (30) zu stellen.

9. System nach Anspruch 8, worin die automatische Greifvorrichtung (38) aufweist: mindestens eine Vorrichtung (50) zum Festhalten einer einzelnen Packung (14); eine Doppelanschluß-Tragstruktur mit mindestens einem Ständer (44), der die Werkzeugbestückung halten kann, und mindestens eine Reihenanordnung (42), die den Ständer (44) derart hält, daß bei Betrieb die Werkzeugbestückung längs des Ständers (44) bewegbar ist, wenn sich der Ständer längs der Reihenanordnung (42) bewegt, um eine gewählte Packung (14), die von einer entsprechenden Tragstange (30) hängt, zu ergreifen oder eine gegebene Packung (14) auf eine entsprechende Tragstange (30) in der Nachschubeinrichtung (20) zu beschicken;
wobei die Vorrichtung (47), die den Ständer (44) gegenüber der Reihe (42) bewegt, und die Greifvorrichtung (38) bezüglich des Ständers (44) durch den Computer (24) steuerbar sind.

10. System nach irgendeinem vorhergehenden Anspruch, worin die automatische Greifvorrichtung (38) eine Vorrichtung (54, 55, 60) aufweist zur Erzeugung eines Unterdrucks, einen Ansaugkolben (52) mit einer Fluidverbindung zur Vorrichtung zur Erzeugung des Unterdrucks, wobei der Ansaugkolben (52) verschieblich an einem Gehäuse (49) befestigt ist und sich in y- und z-Richtung bewegen kann, wobei durchgehend ein Unterdruck aufrechterhalten wird, wenn die Vorrichtung zur Erzeugung des Unterdrucks (54, 55, 60) in Betrieb ist;
worin an dem Saugkolben (52), wenn ein Unterdruck besteht, an der Greifvorrichtung (38) durch den Unterdruck eine Packung (14) festgehalten wird, und
worin es auch eine Vorrichtung (58) gibt, die erkennt, wenn eine Packung (14) am Saugkopf (56) so sauber positioniert ist, daß die Packung (14) dann zu einer Lagereinrichtung (48) bewegt werden kann, bevor sie dort abgelegt wird.

11. System nach Anspruch 1, worin die Greifvorrichtung (38) umfaßt: ein Gehäuse (49);
eine an dem Gehäuse (49) befestigte Vorrichtung (48) zur Lagerung von Packungen (14);
eine Zugriffsvorrichtung (56) für Packungen (14), die verschieblich am Gehäuse (49) angebracht ist, so daß sie sich in der z-Richtung, die senkrecht zur x-und y-Richtung steht, bewegen kann, um eine Packung (14) von einer Tragstange (30) zu entnehmen, wenn das Gehäuse (49) nächst und in Ausrichtung zu einer Tragstange (30) steht, und die sich in der z-Richtung bewegen kann, um eine ergriffene Packung (14) in die Lagervorrichtung (48) zu legen; sowie
eine am Gehäuse angebrachte Identifikationsvorrichtung (26), mit der eine von der Zugriffsvorrichtung (56) zu ergreifende Packung (14) identifiziert werden kann, wobei auf jeder Packung (14) eine Kennung (16) angebracht ist, die von der Identifikationsvorrichtung (26) gelesen werden kann.

12. System nach Anspruch 10, worin die Greifvorrichtung (38) Ventile (54, 57) und Pneumatikzylinder (51, 53) hat zur Bewegung des Saugkolbens (52) in y- und z-Richtung sowie eine Vakuumpumpe, die für den Ansaugkolben (52) und den Saugkopf (56) einen Unterdruck erzeugt, der ausreicht, um eine Packung (14) von einer Tragstange (30) der Lagerfläche (12a, 12b) zu entnehmen und auf dem Saugkopf (56) zu halten.

13. System nach Anspruch 10, worin der Saugkopf (56) zwei Seiten (60, 61) besitzt, an denen ein Unterdruck erzeugbar ist, wobei jede Seite (60, 61) eine Packung (14) aufnehmen kann.

14. System nach Anspruch 13, worin die zwei Seiten (60, 61) parallel zueinander und parallel zur x-Achse sind, und worin jede Packung (14) eine Seite (62) besitzt und die Packungen (14) von der Lagervorrichtung (48) und den Tragstangen (30) der Tragstruktur so gehalten werden, daß die Seite (62) jeder Packung (14) parallel zur x-Achse ist.

15. System nach Anspruch 8, worin die Stangen (30) von den rückwärtigen Stangenhalterungen (32) paarweise weggehen, wobei die erste und die zweite Stange eines jeden Paares im wesentlichen in die z-Richtung, die senkrecht zur x- und y-Richtung steht, zeigt, aber um etwa 180° voneinander getrennt, und worin die Greifvorrichtung (38) einen ersten Greifer (60) und einen zweiten Greifer (62), der die Packungen (14) aufnimmt, umfaßt; sowie eine erste und zweite Werkzeughalterungsstruktur (70, 72), die jeweils mindestens einen Ständer (44) und mindestens eine Reihe (42) zur Halterung des Ständers besitzt, so daß die erste und die zweite Werkzeugbestückung (67, 68) sich auf dem jeweiligen Ständer (44) und der jeweilige Ständer sich entlang der jeweiligen Reihe (42) der ersten bzw. zweiten Werkzeughalterungsstruktur bewegen können, um eine gegebene Packung (14) von einer zugehörigen Tragstange (30) zu nehmen oder eine Tragstange (30) mit der zugehörigen Medizinpackung (14) zu beschicken.

16. System nach Anspruch 1, worin die Greifvorrichtung (38) mindestens einen Greifer (60, 62) hat zur Entnahme der Packungen (14), sowie eine Werkzeughalterungsstruktur (22) mit mindestens einem Ständer (44) zur Halterung der Greifvorrichtung (38) und mindestens einer Reihe (42) zur Halterung des Ständers, so daß die Greifvorrichtung (38) sich entlang des Ständers bewegt, wenn sich der Ständer (44) entlang der Reihe (42) bewegt, um eine gegebene Packung (14) zu entnehmen; dabei kann der Greifer (60, 62) sich auf dem Ständer (44) drehen, um Packungen (14) entweder im ersten oder im zweiten Lagerfeld (12a, 12b) zu entnehmen; sowie
eine Vorrichtung (47), mit der der Ständer (44) gegenüber der Reihe (42) bewegt werden kann, wobei die Bewegungsvorrichtung (47) von einem Computer (24) gesteuert wird und mit ihm in Verbindung steht.

17. System nach Anspruch 1, das auch eine Nachschubstation (20) zum Empfang neuer und zurückgeschickter Packungen (14) umfaßt, wobei die Nachschubstation eine Vielzahl Lagerorte besitzt und jeder Lagerort so bemessen und gestaltet ist, daß er mindestens eine Packung (14) derart halten kann, daß die Packung (14) mit der automatischen Greifvorrichtung (38) an den Lagerort gelegt bzw. von dem Lagerort genommen werden kann; dabei besitzt jeder Lagerort eine eigene x,y- Koordinate.

18. System nach Anspruch 17, worin die Nachschubstation (20) beweglich ist und so bemessen, daß sie entfernbar nächst der Lagerfläche (12a, 12b) gestellt werden kann.

19. System nach irgendeinem vorhergehenden Anspruch, worin die Packungen (14) individuelle Dosen eines Medikaments enthalten.

## Revendications

1. Système pour sélectionner et délivrer des paquets (14) à partir d'une zone de stockage (12a, 12b), afin d'exécuter des commandes, le système comprenant une zone de stockage (12a, 12b) du type contenant une pluralité d'emplacements, chaque emplacement étant dimensionné et configuré pour contenir au moins un paquet (14), et chaque emplacement ayant des coordonnées x, y, distinctes, le système comprenant de plus:
- (a) un moyen automatisé de sélection (38), dimensionné et configuré pour être capable de retenir des paquets (14), de sélectionner des paquets à partir des emplacements de zones de stockage, et de placer des paquets dans les emplacements de la zone de stockage (12a, 12b) en conformité avec les instructions reçues d'un ordinateur (24), le moyen automatisé de sélection (38) ayant un moyen (50) pour s'attacher aux paquets individuels (14) et déplacer ceux-ci; et
- (b) un ordinateur (24) ayant au moins une mémoire qui contient un programme pour diriger le moyen automatisé de sélection (38) vers les emplacements choisis de la zone de stockage (12a, 12b), et une base de données contenant au moins un emplacement de coordonnées x, y distinctes dans la zone de stockage (12a, 12b);
- dans lequel un seul type de paquet (14) est stocké dans chaque emplacement de coordonnées x, y, et les paquets sont dimensionnés et stockés d'une manière telle que les paquets (14) puissent être placés à l'intérieur de la zone de stockage (12a, 12b) et enlevés de celle-ci par le moyen automatisé de sélection (38);
- dans lequel chaque paquet individuel (14) a une étiquette (16) lisible par une machine; et
- dans lequel le système comporte également un lecteur (26) de paquet associé avec le moyen automatisé de sélection (38) pour lire l'étiquette (16).

2. Système selon la revendication 1, dans lequel l'étiquette (16) comporte un code barres, et le lecteur (26) de paquet comporte un lecteur de code barres.

3. Système selon la revendication 1 ou 2, qui comporte de plus un poste (80) de vérification ayant un moyen (82) de lecture pour lire les étiquettes (16) lisibles à la machine.

4. Système selon l'une quelconque des revendications précédentes, qui comporte également un convoyeur (34) positionné pour recevoir les paquets (14) à partir du moyen automatisé de sélection (38).

5. Système selon la revendication 4, qui comporte également des boîtes (36) de prescription pour les patients, qui sont transportées par le convoyeur (34) vers la région du moyen automatisé de sélection (38), de telle manière que le moyen automatisé de sélection (38) puisse transférer le paquet ou les paquets (14) qu'il a sélectionnés vers la boîte associée (36), afin d'exécuter une commande donnée.

6. Système selon l'une quelconque des revendications précédentes, qui comporte également un moyen d'alimentation (20) pour fournir des paquets (14), dans lequel le moyen automatisé de sélection (38) est capable d'accéder, non seulement aux emplacements dans la zone de stockage, mais également au moyen d'alimentation.

7. Système selon l'une quelconque des revendications précédentes, dans lequel la zone de stockage (12a, 12b) comprend un bâti pour supporter une pluralité de barres (30) de support pour tenir les paquets (14), chaque barre (30) étant associée avec un paquet (14) ayant des contenus donnés, et contenant des paquets avec seulement les mêmes contenus.

8. Système selon la revendication 7, dans lequel le bâti (28) est pourvu d'une pluralité de supports arrière (32) de barres, à partir desquels s'étendent les barres (30), chaque barre ayant des coordonnées x, y, uniques, le moyen automatisé de sélection (38) étant capable de retirer un paquet (14) d'une barre (30), ou de placer un paquet (14) à partir d'un moyen d'alimentation (20) sur la barre appropriée (30) pendant le restockage.

9. Système selon la revendication 8, dans lequel le moyen automatisé de sélection (38) comporte au moins un moyen (50) pour s'attacher à un paquet individuel, et comporte également une structure de support à deux lignes, ayant au moins une colonne (44) pour supporter l'outillage et au moins une rangée (42) pour supporter la colonne (44), de telle manière que, à l'utilisation, l'outillage puisse se déplacer le long de la colonne (44) lorsque la colonne se déplace le long de la rangée (42), afin de sélectionner un paquet sélectionné (14) accroché à la barre de support correspondante (30), ou de restocker un paquet donné (14) sur la barre de support correspondante (30) dans le moyen d'alimentation (20);
- dans lequel le moyen (47) pour déplacer la colonne (44) par rapport à la rangée (42), et le moyen de sélection (38) par rapport à la colonne (44), sont commandés par l'ordinateur (24).

10. Système selon l'une quelconque des revendications précédentes, dans lequel le moyen automatisé de sélection (38) comporte un moyen (54, 55, 60) pour produire une aspiration; une ligne (52) d'aspiration en communication de fluide avec le moyen de production de l'aspiration, la ligne (52) d'aspiration étant fixée de façon coulissante à un bâti (49) pour un mouvement dans les directions Y et Z, et maintenant une aspiration à travers elle quand le moyen (54, 55, 60) pour produire une aspiration est actionné;
- dans lequel, quand l'aspiration est appliquée à la ligne (42) d'aspiration, un paquet (14) peut être fixé au moyen de sélection (38), au moyen de l'aspiration; et
- dans lequel il y a également un moyen (58) pour détecter quand un paquet (14) est correctement positionné sur une tête d'aspiration (56), de telle manière que le paquet (14) soit ensuite déplacé vers un moyen de stockage (48) avant de déposer le paquet (14) en cet endroit.

11. Système selon la revendication 1, dans lequel le moyen de sélection (38) comprend:
- une enceinte (49);
- un moyen (48) pour stocker des paquets (14), fixé à l'enceinte (49);
- un moyen (56) pour obtenir un paquet (14), ledit moyen d'obtention étant fixé de façon coulissante à l'enceinte (49) de telle manière qu'il puisse se déplacer dans la direction Z, qui est perpendiculaire aux directions X et Y, pour sélectionner un paquet (14) à partir d'une barre de support (30) quand l'enceinte (49) est adjacente à une barre de support (30) et alignée avec elle, et puisse se déplacer dans la direction Z pour placer un paquet sélectionné (14) sur le moyen de stockage (48); et
- un moyen d'identification (26) fixé à l'enceinte, de telle manière qu'il puisse identifier un paquet (14) à sélectionner par le moyen d'obtention (56), chacun desdits paquets (14) ayant une identité (16) disposée sur lui, qui peut être lue par le moyen d'identification (26).

12. Système selon la revendication 10, dans lequel le moyen de sélection (38) comporte des soupapes (54, 57) et des cylindres pneumatiques (51, 53) pour déplacer la ligne d'aspiration (52) dans les directions Y et Z; et une pompe à vide pour fournir une aspiration à la ligne d'aspiration (52) et à la tête d'aspiration (56) qui soit suffisante pour sélectionner un paquet (14) à partir d'une barre (30) de la zone de stockage (12a, 12b), et ensuite pour la maintenir par la tête d'aspiration (56).

13. Système selon la revendication 10, dans lequel la tête d'aspiration (56) a deux faces (60, 61) à travers lesquelles une aspiration peut être faite, chaque face (60, 61) étant capable de sélectionner un paquet (14).

14. Système selon la revendication 13, dans lequel les deux faces (60, 61) sont parallèles l'une à l'autre, et sont parallèles à l'axe des x, et dans lequel chaque paquet (14) a une face (62) et les paquets (14) sont maintenus par le moyen de stockage (48) et les barres (30) de la structure de support de telle manière que la face (62) de chaque paquet (14) soit parallèle à l'axe des x.

15. Système selon la revendication 8, dans lequel les barres (30) s'étendent à partir des supports arrière (32) de barres par jeux de deux, avec une première barre et une seconde barre dans chaque jeu pointées essentiellement dans la direction Z qui est perpendiculaire aux directions X et Y, mais séparées approximativement à 180 degrés l'une de l'autre, et dans lequel le moyen de sélection (38) comporte une première pince (60) et une seconde pince (62) qui sélectionnent les paquets (14); et une première et une seconde structures (70, 72) de support d'outillage, chaque structure de support d'outillage ayant au moins une colonne (44) et au moins une rangée (42) pour supporter la colonne (44), de telle manière que les premier et second outillages (67, 68) se déplacent le long de la colonne respective (44), et que la colonne respective (44) se déplace le long de la rangée respective (42) de la première et la seconde structures de support d'outillage respectivement, pour sélectionner un paquet donné (14) à partir d'une barre de support correspondante (30), ou pour restocker une barre de support (30) avec un paquet de médicament associé (14).

16. Système selon la revendication 1, dans lequel le moyen de sélection (38) comporte au moins une pince (60, 62) qui sélectionne les paquets (14); et une structure (22) de support d'outillage ayant au moins une colonne (44) pour supporter le moyen de sélection (38), et au moins une rangée (42) pour supporter la colonne (44), de telle manière que le moyen de sélection (38) se déplace le long de la colonne (44) lorsque la colonne (44) se déplace le long de la rangée (42) pour sélectionner un paquet donné, ladite pince (60, 62) étant capable de tourner sur la colonne (44) pour sélectionner des paquets, soit dans la première, soit dans la seconde zone de stockage (12a, 12b); et
- un moyen (47) pour déplacer la colonne (44) par rapport à la rangée (42), ledit moyen de déplacement (47) étant commandé par un ordinateur (24) et étant en communication avec lui.

17. Système selon la revendication 1, qui comporte également un poste d'alimentation (20) pour recevoir des paquets nouveaux et des paquets retournés (14), le poste d'alimentation ayant une pluralité d'emplacements, chaque emplacement étant dimensionné et configuré pour contenir au moins un paquet (14), de telle manière que le paquet puisse être placé à l'intérieur des emplacements, et à en être retiré, par le moyen automatisé de sélection (38), chaque emplacement ayant des coordonnées x, y distinctes.

18. Système selon la revendication 17, dans lequel le poste d'alimentation (20) est mobile et est dimensionné pour être positionné, d'une manière démontable, adjacent à la zone de stockage (12a, 12b).

19. Système selon l'une quelconque des revendications précédentes, dans lequel les paquets (14) contiennent des doses individuelles d'un médicament.
